Europäisches Patentamt

European Patent Office

Office européen des brevets

(19)

(11) Veröffentlichungsnummer: **0 248 304**
**A2**

## (12) EUROPÄISCHE PATENTANMELDUNG

(21) Anmeldenummer: **87107556.0**

(51) Int. Cl.⁴: **G01N 27/46**

(22) Anmeldetag: **23.05.87**

(30) Priorität: **06.06.86 CH 2307/86**

(43) Veröffentlichungstag der Anmeldung:
**09.12.87 Patentblatt 87/50**

(84) Benannte Vertragsstaaten:
**CH DE ES FR GB IT LI**

(71) Anmelder: **KONTRON-HOLDING AG**
**Bernerstrasse Süd 169**
**CH-8010 Zürich(CH)**

(72) Erfinder: **Eberhard, Patrick, Dr.**
**Parkallee 11**
**CH-4123 Allschwil(CH)**
Erfinder: **Mindt, Wolfgang, Dr.**
**Sonnmattstrasse 25**
**CH-4142 Münchenstein(CH)**
Erfinder: **Palma, Jean-Pierre**
**Mühleweg 17**
**CH-4133 Pratteln(CH)**

(74) Vertreter: **Buntz, Gerhard et al**
**Grenzacherstrasse 124 Postfach 3255**
**CH-4002 Basel(CH)**

(54) **Elektrodenanordnung.**

(57) Sauerstoffpartialdrucksensor mit einer Messelektrode (4) und einer Referenzelektrode (5), einer die Elektroden bedeckenden Membran (8) und einer Elektrolytschicht (7) zwischen den Elektroden und der Membran, wobei der Elektrolyt eine definierte Konzentration einer löslichen Silberverbindung oder eines Silberkomplexes enthält und die Referenzelektrode (5) eine kreisförmige Fläche darstellt mit einem Durchmesser von höchstens einem Zehntel des Durchmessers der gesamten aktiven Sensorfläche (6).

Fig.2

EP 0 248 304 A2

# Elektrodenanordung

Die Erfindung betrifft eine Elektrodenanordnung zur Messung des Sauerstoffpartialdrucks eines Mediums mit einer Mess-und einer Referenzelektrode, einer die Elektroden bedeckenden Membran und einer Elektrolyschicht zwischen den Elektroden und der Membran.

Elektrodenanordnungen dieser Art werden auch als Sensoren bezeichnet und sind u.a. bekannt für die kutane Messung des Sauerstoffpartialdrucks im Blut. Zu diesem Zweck wird durch eine in dem Sensor vorhandene Heizung das Gewebe am Messort geheizt und dadurch arterialisiert.

Die bisherigen Erfahrungen mit solchen Sensoren haben gezeigt, dass im Betrieb zwei typische Fehlerquellen auftreten:

1. An der Messelektrode, die in der Regel aus einer Platin-Mikrokathode besteht, bilden sich unregelmässige Ablagerungen von Silber, die in der Literatur teilweise als Dendriten bezeichnet werden. Diese Ablagerungen verursachen eine allmähliche Vergrösserung der Kathodenoberfläche und somit eine unreproduzierbare und unkontrollierbare Drift der Messempfindlichkeit des Sensors. Da die Silberablagerungen zum Teil mechanisch unstabil sind, können sie durch einen leichten Druck auf die Membranoberfläche (z.B. beim Reinigen des Sensors) von der Platinkathode abgetrennt werden. Hierdurch kann eine plötzliche, vom Benutzer häufig unbemerkte Aenderung des Messempfindlichkeit verursacht werden.

2. Infolge der unkontrollierten Silberabscheidung ist bei derzeitig gebräuchlichen Sensoren zur Messung des Sauerstoffpartialdruckes eine regelmässige sorgfältige Reinigung der Kathodenoberfläche erforderlich. Diese Reinigung erfolgt durch umständliches und für den Benutzer oft als mühsam empfundenes manuelles Bearbeiten (Reiben) der Kathodenoberfläche mit einem Poliertuch. Diese Reinigung bewirkt, sofern sie sorgfgältig ausgeführt wird, die vollständige Entfernung der Silberabscheidung und die Wiederherstellung einer reinen Platinoberfläche der Kathode. Wenn der Sensor erstmalig oder nach sorgfältiger Reinigung wieder in Betrieb genommen wird, dauert es längere Zeit, bis stabile Messungen möglich sind. Diese Zeit ist unreproduzierbar und hängt davon ab, wie sorgfältig die Reinigung vorgenommen worden ist. Häufig verhält es sich so, dass die Zeit bis zur Stabilisierung des Messtromes um so länger ist, desto sorgfältiger die Reinigung vorgenommen worden ist. Es ist offensichtlich, dass dies für den Benützer unverständlich und frustrierend ist und als ein gravierender Nachteil empfunden wird.

Es wurde nun überraschend gefunden, dass die Voraussetzung für eine stabile Messung das Vorhandensein einer dünnen Silberschicht auf der Platinelektrode ist. Bei neuen Elektroden hat sich diese Silberschicht noch nicht gebildet, und bei schon im Gebrauch befindlichen Elektroden wird die während des Betriebs gebildete Silberschicht beim gründlichen Reinigen (Polieren) der Oberfläche regelmässig beseitigt.

Der Erfindung liegt die Aufgabe zugrunde, die unkontrollierte, zu Dendritenbildung führende Silberablagerung an der Kathode zu vermeiden und gleichzeitig eine definierte Silberschicht auf der Kathode zu erzeugen. Ausserdem soll die Notwendigkeit einer regelmässigen Reinigung der Kathodenoberfläche vermieden werden.

Erfindungsgemäss wird dies dadurch erreicht, dass die Oberfläche der Referenzelektrode gegenüber der bisher üblichen Fläche stark verkleinert ist und dass der Elektrolyt eine definierte Konzentration einer Silberverbindung oder eines Silberkomplexes gelöst enthält.

Ein Ausführungsbeispiel der Erfindung ist nachfolgend anhand der beiliegenden Zeichnungen beschrieben. Es zeigen

Fig. 1 eine Aufsicht auf die Messfläche eines $pO_2$-Sensors mit entfernter Membran.

Fig. 2 einen Schnitt durch einen sogenannten kutanen $pO_2$-Sensor.

Wie aus den beiden Figuren der Zeichnung ersichtlich, besteht die Elektrodenanordnung wie üblich aus einem Gehäuse 1 und einem darin angeordneten Heizblock 2, der von einer Heizwindung 3 umgeben ist. Innerhalb des Heizblocks ist eine Messelektrode 4 und eine Referenzelektrode 5 angeordnet. Bei der Messelektrode 4 handelt es sich um die Kathode, die im vorliegenden Fall als sogenannte Mikrokathode ausgebildet ist. Sie besteht aus einem Platindraht von ca. 30 $\mu$m Durchmesser. Die Referenzelektrode, die als Anode geschaltet ist, besteht aus Silber. Bei den bisher bekannten kutanen $pO_2$-Elektroden war die Referenzelektrode meistens ringförmig um die Kathode herum angeordnet. Im vorliegenden Fall wurde zur Verringerung der Fläche keine ringförmige, sondern eine wesentlich kleinere kreisförmige Referenzelektrode vorgesehen. Der Durchmesser der Referenzelektrode beträgt höchstens ein Zehntel des Durchmessers der aktiven Sensorfläche.

Die Messelektrode 4 und die Referenzelektrode 5 sind so im Heizblock 2 angeordnet, dass sie eine gemeinsame Stirnfläche oder Messfläche 6 bilden, die konvex gewölbt ist. Die Messfläche 6 ist mit einer Elektrolytschicht 7 bedeckt, die wiederum von einer semipermeablen Membran 8 abgedeckt ist. Die Membran 8 wird von einem Spannring 9 gehalten und gespannt.

Die Membran 8 besteht aus Teflon® oder einem anderen für diese Anwendung bekannten und üblichen Kunststoff.

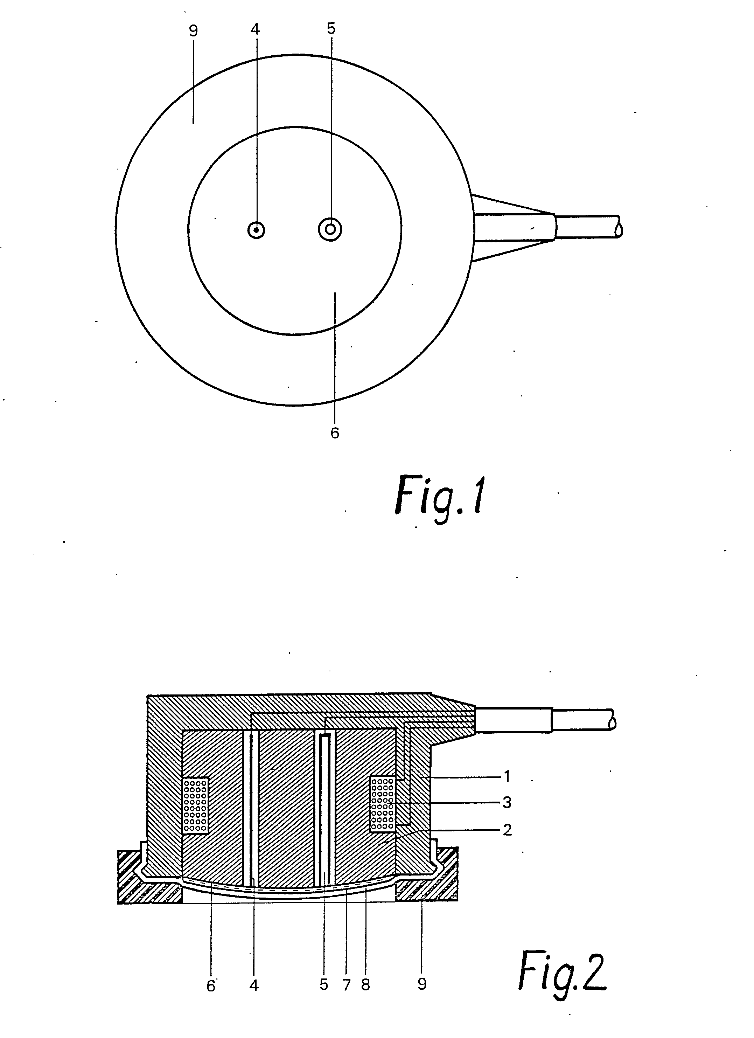

Fig. 2 zeigt die Aufsicht auf die Messfläche eines $pO_2$-Sensors bei entfernter Membran. Auch aus dieser Aufsicht ist ersichtlich, dass die Referenzelektrode gegenüber der üblichen Grösse stark verkleinert ist.

Die verkleinerte Referenzelektrode führt dazu, dass weniger Silber in Lösung geht und dadurch auch weniger Dendritenbildung an der Kathode auftritt. Der Umstand, dass weniger Silber in Lösung geht, führt nun aber dazu, dass es länger dauert, bis eine blanke Kathode versilbert ist und bis man somit nach dem Vorstehenden stabile Messungen erwarten kann. Um eine kontrollierte Silberabscheidung auf der Kathode sicherzustellen, ist dem Elektrolyten Silber in einer geeigneten löslichen Verbindung oder einem löslichen Komplex beigegeben. Auf diese Weise kann durch kontrollierte Silberabscheidung sogar eine Verkürzung der Zeit erreicht werden, die es braucht, bis stabile Messungen durchgeführt werden können.

Als lösliche Silberverbindung kommen z.B. folgende Verbindungen infrage: $AgCl$, $AgCN$, $AgNO_3$. Als Komplexbildner für Silber kommen z.B. Aethylendiamin-tetraessigsäure (EDTA) und Diäthylentriamin-pentaessigsäure (DTPA) in Frage. Die Konzentration des dem Elektrolyten zugegebenen Silbers liegt typisch in der Grössenordnung zwischen 10 und $100 \bullet 10^{-6}$ mol/1.

**Ansprüche**

1. Elektrodenanordung zur Messung des Sauerstoffpartialdrucks eines Mediums mit einer Messelektrode (4) und einer Referenzelektrode (5), einer die Elektroden bedeckenden Membran (8) und einer Elektrolytschicht (7) zwischen den Elektroden und der Membran, dadurch gekennzeichnet, dass der Elektrolyt eine defininerte Konzentration einer löslichen Silberverbindung oder einer Silberkomplexes enthält.

2. Elektrodenanordnung nach Anspruch 1, dadurch gekennzeichnet, dass die Referenzelektrode (5) eine kreisförmige Fläche darstellt mit einem Durchmesser von höchstens einem Zehntel des Durchmessers der gesamten Messfläche (6).

Fig.1

Fig.2